# EUROPEAN PATENT SPECIFICATION

(11) **EP 1 163 659 B1**
(45) Date of publication and mention of the grant of the patent: **13.12.2006**
(21) Application number: 00985251.8
(22) Date of filing: 27.12.2000
(51) Int. Cl.: G10H 1/00, G06F 1/00

(54) **PROTECTING COMPRESSED CONTENT AFTER SEPARATION FROM ORIGINAL SOURCE**
VERFAHREN ZUM SCHUTZ DES KOMPRIMIERTEN INHALTES NACH TRENNUNG VON ORIGINALER QUELLE
PROTECTION DE CONTENU COMPRESSE APRES SEPARATION DE LA SOURCE D'ORIGINE

(30) Priority: 13.01.2000 US 176074 P; 11.08.2000 US 636725
(43) Date of publication of application: 19.12.2001
(73) Proprietor: Koninklijke Philips Electronics N.V., 5621 BA Eindhoven (NL)
(72) Inventor: EPSTEIN, Michael, NL-5656 AA Eindhoven (NL)
(74) Representative: Groenendaal, Antonius W. M.
(86) International application number: PCT/EP2000/013227
(87) International publication number: WO 2001/052234

(56) References cited:
- WO-A-99/66386
- US-A- 5 476 746
- US-A- 5 636 276
- US-A- 5 933 503

## Description

### BACKGROUND OF THE INVENTION

### 1. Field of the Invention

This invention relates primarily to the field of consumer electronics, and in particular to the protection of copy-protected content material.

### 2. Description of Related Art

A number of systems have been proposed for protecting content material, such as an audio or video recording, from unauthorized copying and unauthorized distribution. The Secure Digital Music Initiative (SDMI) and others advocate the use of a "licensed compliant module" (LCM) to control the recording and distribution of the protected material. The LCM typically stores the protected material in a local storage device in a secure form, such as an encrypted form. When the user desires to provide another device, such as a portable playback device (PD), with the content material, the LCM verifies that the PD is a compliant device, and provides the content material to the device, subject to agreed upon, or licensed, conditions. In a typical embodiment, the LCM includes a check-in/check-out process, wherein a log is maintained for each copy of each protected material that is provided to a PD. When the PD "checks-in" the material, the material is erased from the PD, and the log is updated. If the protected material, for example, includes a "one copy at a time" restriction, the LCM will not provide another copy of the protected material until a prior copy is returned.

A variety of techniques have been proposed for assuring that the LCM only receives and stores authorized copies of the protected material. These security techniques have primarily focused on providing a means of distinguishing unauthorized copies of material that are distributed via the Internet. Generally, material that is distributed via the Internet is distributed in a compressed form, to minimize the bandwidth requirements for downloading the material, and at least one security system is based on the detection of a compressed format, or the detection of an uncompressed format that had been compressed.

US Patent number 5,636,276 discloses a server device extracting music and broadcasting an encrypted version of the extracted music information to at least one terminal connected to plural audio/visual playback devices.

The Secure Digital Music Initiative and others advocate the use of "digital watermarks" to identify authorized content material. EP 0981901 "Embedding auxiliary data in a signal" issued 1 March 2000 to Antonius A.C.M. Kalker, discloses a technique for watermarking electronic material. As in its paper watermark counterpart, a digital watermark is embedded in the content material so as to be detectable, but unobtrusive. An audio playback of a digital music recording containing a watermark, for example, will be substantially indistinguishable from a playback of the same recording without the watermark. A watermark detection device, however, is able to distinguish these two recordings based on the presence or absence of the watermark. A "robust" watermark can not be removed from the content material without destroying the content material. Conversely, a "fragile" watermark, as its name implies, is a watermark that is destroyed or damaged if any changes are made to the content material. By encoding protected material with a robust and a fragile watermark, an LCM can detect that the material is protected material (via the presence of the strong watermark), and can also detect whether the material had ever been compressed or otherwise tampered with (via the absence of the weak watermark).

This fragile-watermarking protection, however, assumes that all authorized copies of content material will be in an uncompressed form. With the popularity of compressed formats becoming more prevalent, however, consumer devices are being produced that provide compressed format outputs. For example, application programs on personal computers are available that read Compact Discs (CDs) and store the songs from the CD onto a hard drive storage unit in compressed form, commonly MP3. Similarly, CD players are available, or will soon be available, with direct MP3 or similar output for the digital transfer of songs to other devices, such as an LCM. In this scenario, a user's authorized copy of a song from a CD that the user has purchased will be indistinguishable from an unauthorized copy of a song from the Internet, because both copies will have a robust watermark, but no fragile watermark.

### BRIEF SUMMARY OF THE INVENTION

The object of the present invention is defined by the appended claims 1-6.

It is an object of this invention to provide a method and system for protecting content material from unauthorized copying and/or distribution after this content material is removed or copied from its original source. It is a further object of this invention to provide a method and system for distinguishing locally produced compressed files from files that are distributed from a remote source, such as an Internet site.

These objects and others are achieved by binding the device that legitimately extracts content material from a source to the compliant module that enforces copy protection schemes in the distribution of copy protected material. Thereafter, the device that extracts the content material binds the content material to the compliant module that enforces the copy protection schemes. By binding the legitimate extractor to the distribution module that enforces copy protection, other, potentially unauthorized, extractions from other extraction devices, can be distinguished. Because the binding of the legitimate extractor to the distribution module is used to distinguish legitimate extractions, rather than encoding characteristics of the extracted content, such as the presence or absence of a fragile watermark, the legitimate extractor can be configured to provide any encoding, including compressed encodings that minimize bandwidth and memory requirements. The binding of the extraction device to the distribution module can be physical or logical. A physical binding relies on the physical integrity of the system to assure that alternative sources cannot gain access to the distribution module. A logical binding relies on cryptographic techniques to assure that only authorized extractors are bound to distribution modules.

### BRIEF DESCRIPTION OF THE DRAWINGS

The invention is explained in further detail, and by way of example, with reference to the accompanying drawings wherein:
FIG. 1 illustrates an example block diagram of a secure extraction and distribution system in accordance with this invention.
FIG. 2 illustrates an example block diagram of an alternative secure extraction and distribution system in accordance with this invention.
FIG. 3 illustrates an example block diagram of an extraction device and distribution module that provides secure communication of content material in accordance with this invention.

Throughout the drawings, the same reference numerals indicate similar or corresponding features or functions.

### DETAILED DESCRIPTION OF THE INVENTION

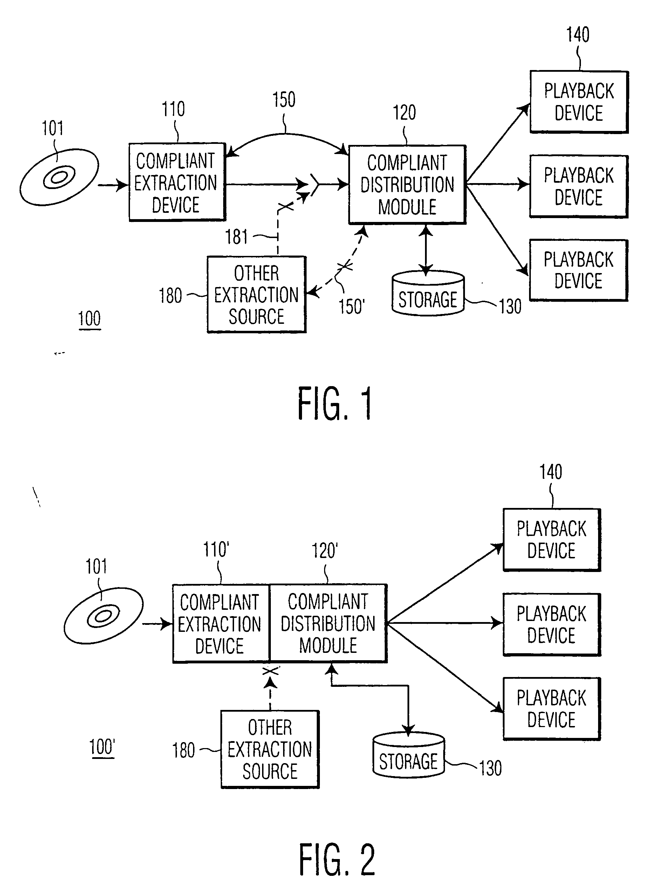

FIG. 1 illustrates an example block diagram of a secure extraction and distribution system 100 in accordance with this invention. The system 100 includes a compliant extraction device 110 and a compliant distribution module 120. A "compliant" component is one that conforms to the security protocols established, such as conforming to the SDMI specifications. For example, a compliant extractor determines the distribution and copy limits associated with original source material, extracts portions of the content material only if authorized, and communicates any distribution or copy limits along with each extraction. In SDMI terminology, the extraction device 110 is commonly referred to as a "ripper", and the distribution module 120 as a "Licensed Control Module", or "LCM". The extraction device 110 is configured to extract one or more data items from a source 101 of protected or unprotected data. In the context of this invention, the extraction and processing of protected data is discussed hereinafter.

In the context of SDMI, the extracted data item is an extraction of one or more songs from an album on a CD or other media. The distribution module 120 is configured to facilitate maintaining a collection of data items, e.g. songs, on a local storage device 130, and to facilitate the distribution of the individual data items to other devices 140, typically portable or stationary playback devices. In other contexts, the distribution module 120 may also be configured to facilitate the distribution of the data items to other recording devices or other distribution systems. Copending U.S. patent application "NEW PROTOCOL FOR SECURE REGISTRATION OF MUSIC (or any data) IN A CHECK IN CHECK OUT SYSTEM", serial number 09/548,728, filed 13 April 2000 for Michael Epstein, Attorney Docket PHA-23,671 describes a method and system for limiting the distribution of protected content material among playback devices to conform to licensed distribution rights.

In accordance with a first aspect of this invention, the extraction device 110 and the distribution module 120 are bound together, such that the extraction device 110 only provides extracted data item(s) that are bound to a compliant distribution module 120, and a distribution device 120 only accepts data items that are bound to it via a compliant extraction device 110.

A compliant component contains a means of identifying itself as a compliant component. Typically, a compliant component contains an identifier that is 'certified' by a "trusted authority". The trusted authority digitally signs the certificate that identifies the compliant component, using a private key that is known only to the trusted authority. In accordance with this invention, the compliant components 110, 120 also include a public key of the trusted authority that is used to verify the digital signature, and the identifier of each device corresponds to a public key that is associated with each component 110, 120. Each component 110, 120 also contains a private key corresponding to the certified public key, as a public-private key pair, common in the art.

To logically bind the two components 110, 120 together, a cryptographic authentication process is used, as illustrated by the bi-directional arrow 150. Each component 110, 120 communicates, via 150, its certified public key to the other 120, 110, and each component 110, 120 verifies that the communicated public key has been certified by the trusted authority. To verify that the other component is the compliant component that is identified by the certificate, a challenge-response protocol is used. The first component transmits a random number to the second component (the challenge). The second component encrypts the random number using its private key, and transmits the encrypted number back to the first component (the response). The first component decrypts the encrypted number, using the second component's certified public key. If the decryption of the encrypted number matches the originally transmitted random number, the second component is verified as being the certified component, because only the second component has knowledge of the private key corresponding to its certified public key. This challenge-response process is then repeated by the second component, to verify that the first component is the component corresponding to the certified public key that was communicated to the second component. Other techniques for verifying the identity of a compliant device, common in the art, may alternatively be used. In a preferred embodiment, the challenge-response process includes a time-out limit at each stage, to detect an attempt of copying protected material from a remote source, for example, from a remote Internet site. A local extraction and distribution component can be expected to provide a response to a challenge within microseconds, whereas a remote component might be expected to require milliseconds or more to communicate the response back to a remote challenging device.

Note that if another extraction source 180 is not a compliant device, the authentication process discussed above will fail, as indicated by the dashed arrow 150', and the distribution module 120 will not accept content material from this source 180.

After authenticating that the distribution module 120 is a compliant module, the extraction device 110 transmits the extracted content material and digitally signs the transmission. The compliant distribution module 120 does not accept content material for further distribution unless the digital signature of the content material corresponds to the signature of the authenticated extraction device 110. In this manner, if an alternative source 180 attempts to substitute material, as indicated by the dashed line 181, after the compliant extraction device satisfies the authentication process, the compliant module 120 will recognize the substitution, because the substituted material will not be digitally signed by the extraction module 110. In a preferred embodiment, a one-time key is used, to prevent repeated use, or a secure time-stamp is used, to assure that the signed material is from a recently challenged extraction device.

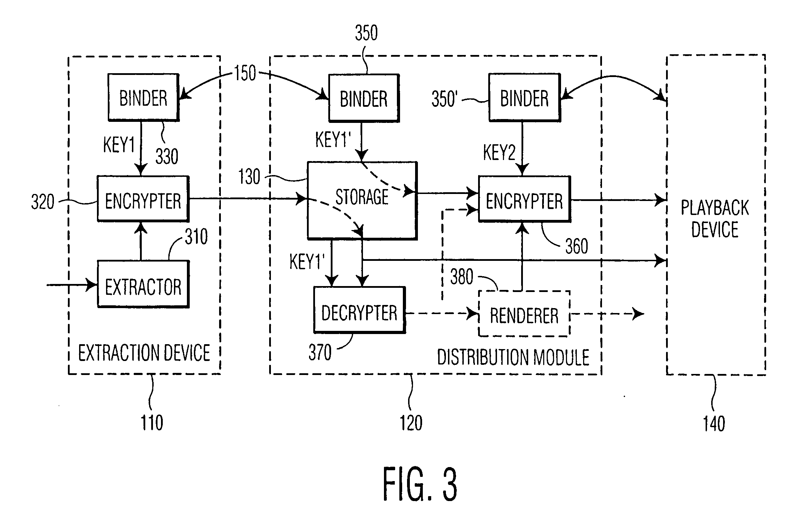

Other security techniques can also be used to assure that the binding between the device 110 and module 120 remains secure. FIG. 3 illustrates an example block diagram of an extraction device 110 and distribution module 120 that provides a secure communication of content material. The binders 330 and 350 in the extraction device 110 and distribution module 120, respectively, effect the above discussed cryptographic authentication process, and generate a set of secure keys, Key1 and Key1'. A cryptographic key exchange, such as a Diffie-Hellman exchange, common in the art, is preferably used to provide an encryption key, Key1, for use by the extraction device 110, and a decryption key, Key1', for use by the distribution module 120. The keys Key1 and Key1' may be identical, or may each be a corresponding key of an asymmetric key-pair. The extraction device 110 encrypts the extracted content material using the exchanged key, Key1, which is commonly termed a "session key". In a preferred embodiment, the distribution device 120 stores the encrypted material, and also stores the session key that was used to encrypt the encrypted material. Thereafter, the distribution module 120 can decrypt the encrypted material as required, using the stored session key, Key1', that is associated with the stored encrypted material, via a decrypter 370. An optional renderer 380 is configured to render the decrypted content material for a direct presentation to a user.

Also in a preferred embodiment, the playback device 140 is configured to decrypt the extracted content material. In this embodiment, the distribution module 120 encrypts the session key Key1' using a second session key, Key2, that is established between the module 120 and the playback device 140, via the encrypter 360. The encrypted content material and the re-encrypted original session key are thereafter communication to the playback device 140. The playback device 140 decrypts the encrypted original session key, using the second session key Key2, and then decrypts the encrypted extracted content material, using this decrypted session key Key1'. Alternatively, the decrypted content material from the decrypter 370 is re-encrypted by the encrypter 360 using the second session key Key2, and the playback device 140 is configured to decrypt this re-encrypted content material directly.

Another method of binding the extraction device 110 to the distribution module 120 is to physically bind the devices, as illustrated in FIG. 2. In the alternative embodiment of the system 100' in FIG. 2, a compliant extraction device 110' is physically bound to a distribution module 120'. Any of a variety of techniques can be employed to assure the security of this bonding. In a preferred embodiment, the system 100' includes a tamper-detection device, such as a frangible device that is attached to an enclosure that binds the components 110' and 120'. Alternatively, an integrated circuit can be created that includes the output stage of the extraction device 110' and the input stage of the distribution module 120', so that the actual interface point between the two devices 110' and 120' is not accessible for inserting a substitute, potentially illicit, copy of copy protected material. Another alternative is to merely rely on the lack of an explicit interface port to discourage the "casual" theft of copy protected material via a download from an Internet site. That is, if the extraction device 110' and distribution module 120' are within a single enclosure, with no obvious or external interconnect point, most consumers will not open the enclosure, decipher the layout to determine the interface point, and modify the circuit board to allow for an insertion of an illicit copy of a song. Contrarily, unplugging a legitimate source and plugging in an illicit source via external connections between components 110, 120, such as illustrated in FIG. 1, can be considered a reasonably likely occurrence.

In like manner, if the extraction device 110' is a software application, such as an application that reads content material from a CD or DVD on a personal computer, and conventionally stores a compressed file, such as an MP3 file, on a hard drive, then, in accordance with this aspect of the invention, the distribution module 120' is included within the same software application. In this manner, the material that is stored on the hard drive is bound to the distribution module 120', preferably in an encrypted form. Thereafter, the distribution module 120' provides material to other playback or recording devices 140 if and only if the material on the hard drive corresponds to material that has been bound to the device 120'. In this manner, material that is placed on the hard drive via another source 180, such as an Internet connection, will not be distributed by the distribution module 120'.

In a further embodiment of this invention, the binding process occurs at one point in time, and the actual communication of the material occurs at a later time. A time limit may still be employed during the authentication process, to verify that the extraction device 110 and distribution module 120 are in close physical proximity, but thereafter, the extraction device 110 is configured to allow substantially unrestricted communication of protected material to the previously verified module 120, using, for example, the key Key1 for all subsequent encodings. In like manner, the extraction device 110 may be configured to grant an automatic authentication of the first distribution module 120 that it encounters, thereby minimizing the complexity required for effecting the binding between the extraction device 110 and the distribution module 120. In this embodiment, the extraction device 110 is preferably configured to provide protected material only to the first module 120 that it encounters, thereby precluding the use of the extraction device 110 as a provider of widely distributable copies of the material. That is, for example, when a user acquires an extraction device 110, and connects it to a distribution module 120, the initial connection is automatically verified relative to the this module 120, thereby facilitating an easy-to-use and highly-reliable configuration of the extraction device to a user's environment. Thereafter, however, the user is prevented from using this extraction device to provide material to other users' distribution devices. To allow for a subsequent change to the user's system, a one-for-one replacement protocol is provided that allows the replacement of the distribution device 120 by another distribution device, wherein, after the replacement, a subsequent attempt to use the original device 120 with the extraction device 110 will fail. In a preferred embodiment, the identifier of the original device 120 is placed in a "revoked identifier" list maintained by the extraction device 110 after the replacement.

In each of the above embodiments, the extraction device 110 may also be configured to access an external source of revoked authorization identifiers. Such revoked authorizations may be issued when it is discovered that unauthorized copies of the content material originated at the identified device. Copending U.S. patent application "UPDATING A REVOCATION LIST TO FOIL AN ADVERSARY", serial number 09/370,489, filed 9 August 1999 for Michael Epstein, Attorney Docket PHA 23,743 describes a method and system for distributing lists of revoked authorization identifiers of devices.

The foregoing merely illustrates the principles of the invention. It will thus be appreciated that those skilled in the art will be able to devise various arrangements which, although not explicitly described or shown herein, embody the principles of the invention and are thus within its spirit and scope. For example, some copy protection schemes rely on the use of a "ticket" that is "punched" at each level of a copy hierarchy. European patent EP0906700, "METHOD AND SYSTEM FOR TRANSFERRING CONTENT INFORMATION AND SUPPLEMENTAL INFORMATION RELATED THERETO", issued 7 April 1999 to Johan P.M.G. Linnartz et al, presents a technique for the protection of copyright material via the use of a watermark "ticket" that controls the number of times the protected material may be rendered. This ticketing scheme can be incorporated in this invention by configuring the extraction device 110 to also "punch" the ticket, and to provide a certified copy of this ticket to the distribution module 120. Alternatively, if the distribution module 120 provides an identifier, the identifier and the ticket can be signed together by the extraction device 110. In this manner, other distribution devices are able to detect an attempted reuse of a signed ticket. These and other system configuration and optimization features will be evident to one of ordinary skill in the art in view of this disclosure, and are included within the scope of the following claims.

## Claims

1. A system (100) for protecting content material from unauthorized copying comprising:
an extraction device (110) that is configured to receive protected content material and to provide therefrom an extracted data item corresponding to at least a portion of the protected content material, and
a distribution module (120) that is configured to receive and accept the extracted data item from the extraction device (110), and to store the accepted extracted data item for subsequent communication to a playback device (140),
**characterised in that**,
the extraction device (110) is bound to the distribution module (120) so as to prevent the acceptance of an unauthorized data item by the distribution module (120) received from a source other than the extraction device (110) or another bound extraction device.

2. The system (100) of claim 1, wherein
the extracted data item that is stored by the distribution module (120) is bound to the distribution module (120).

3. The system (100) of claim 1, wherein
the extraction device (110) and distribution module (120) are bound via a physical connection.

4. The system (100) of claim 1, wherein
the extraction device (110) and distribution module (120) are logically bound by each verifying that a certificate communicated by the other has been signed by a trusted authority.

5. The system (100) of claim 4, wherein
the verification step includes a timeout limit.

6. The system (100) of claim 1, wherein
the extraction device (110) is further configured to compress the portion of the content material to form the extracted data item.

## Patentansprüche

1. System (100) zum Schützen von Informationsinhalten vor unbefugtem Kopieren, umfassend:
eine Extraktionsvorrichtung (110), welche konfiguriert ist, um geschützte Informationsinhalte zu empfangen und daraus ein extrahiertes Datenelement entsprechend mindestens eines Abschnitts der geschützten Informationsinhalte bereitzustellen, und ein Verteilungsmodul (120), welches konfiguriert ist, um das extrahierte Datenelement von der Extraktionsvorrichtung (110) zu empfangen und zu akzeptieren und um das akzeptierte, extrahierte Datenelement zur nachfolgenden Kommunikation an eine Wiedergabevorrichtung (140) zu speichern,
**dadurch gekennzeichnet, dass**
die Extraktionsvorrichtung (110) an das Verteilungsmodul (120) gebunden ist, um so die Annahme eines unbefugten Datenelements durch das Verteilungsmodul (120) zu verhindern, welches von einer anderen Quelle als der Extraktionsvorrichtung (110) oder von einer anderen gebundenen Extraktionsvorrichtung empfangen wurde.

2. System (100) nach Anspruch 1, wobei
das extrahierte Datenelement, welches von dem Verteilungsmodul (120) gespeichert wird, an das Verteilungsmodul (120) gebunden ist.

3. System (100) nach Anspruch 1, wobei
die Extraktionsvorrichtung (110) und das Verteilungsmodul (120) über eine physikalische Verbindung gebunden sind.

4. System (100) nach Anspruch 1, wobei
die Extraktionsvorrichtung (110) und das Verteilungsmodul (120) logisch aneinander gebunden sind, wobei verifiziert wird, dass ein Zertifikat, welches von dem Anderen kommuniziert wird, von einer zuverlässigen Instanz unterschrieben wurde.

5. System (100) nach Anspruch 4, wobei
der Verifizierungsschritt eine Zeitbegrenzung aufweist.

6. System (100) nach Anspruch 1, wobei
die Extraktionsvorrichtung (110) weiterhin konfiguriert ist, den Abschnitt der Informationsinhalte zu komprimieren, um das extrahierte Datenelement zu bilden.

## Revendications

1. Système (100) pour protéger du matériau de contenu contre des copies non autorisées, comprenant:
un dispositif d'extraction (110) qui est configuré pour recevoir du matériau de contenu protégé et pour fournir à partir de ce dernier une donnée extraite correspondant à au moins une partie du matériau de contenu protégé, et
un module de distribution (120) qui est configuré pour recevoir et accepter la donnée extraite du dispositif d'extraction (110) et pour stocker la donnée extraite et acceptée en vue d'une communication subséquente à un dispositif de reproduction (140),
**caractérisé en ce que**
le dispositif d'extraction (110) est lié au module de distribution (120) de manière à empêcher l'acceptation d'une donnée non autorisée par le module de distribution (120), reçue d'une source autre que le dispositif d'extraction (10) ou un autre dispositif d'extraction lié.

2. Système (100) suivant la revendication 1, dans lequel
la donnée extraite qui est stockée par le module de distribution (120) est liée au module de distribution (120).

3. Système (100) suivant la revendication 1, dans lequel
le dispositif d'extraction (110) et le module de distribution (120) sont liés par l'intermédiaire d'une connexion physique.

4. Système (100) suivant la revendication 1, dans lequel
le dispositif d'extraction (100) et le module de distribution (120) sont liés logiquement par chaque vérification qu'un certificat communiqué par l'autre a été signé par une autorité de confiance.

5. Système (100) suivant la revendication 1, dans lequel
l'étape de vérification comprend une limite de temporisation.

6. Système (100) suivant la revendication 1, dans lequel
le dispositif d'extraction (110) est en outre configuré pour compresser la partie du matériau de contenu afin de former la donnée extraite.
